# EUROPEAN PATENT APPLICATION

(11) **EP 4 644 161 A1**
(43) Date of publication of application: **05.11.2025**
(21) Application number: 24173104.1
(22) Date of filing: 29.04.2024
(51) Int. Cl.: B60L 3/00, B60L 58/18, B60L 58/24, H01M 10/42, H01M 10/44, H01M 10/48, H01M 10/613, H01M 50/204, H01M 50/383

(54) **PREVENTIVE SAFETY DISCHARGE FOR BATTERY SYSTEMS**

(71) Applicant: ABB SCHWEIZ AG, 5400 Baden (CH)
(72) Inventor: HE, Minglong, 4310 Rheinfelden (CH); ABPLANALP, Markus, 5405 Baden-Dättwil (CH); LANDMANN, Daniel, 4125 Riehen (CH); TROENDLE, Pirmin, 79761 Waldshut-Tiengen (DE)
(74) Representative: Zimmermann & Partner Patentanwälte mbB

(57) **Abstract**

A preventive battery discharge system (100) for a battery system (110) with a plurality of battery cell assemblies (121, 122) in a battery system housing (111), the preventive battery discharge system comprising an interface (130) for receiving a thermal runaway indication signal for a first battery cell assembly (121) of the plurality of the battery cell assemblies; an energy sink device (140) in an energy sink device housing (141), the energy sink device connectable with the plurality of battery cell assemblies by a switching unit (150), that is configured to receive electrical energy discharged from at least one second battery cell assembly (122) of the plurality of the battery cell assemblies; and a control module (160) configured to identify the at least one second battery cell assembly to be discharged based upon the thermal runaway indication signal received via the interface; and configured to control the switching unit to discharge the at least one second battery cell assembly and to transport energy from the at least one second battery cell assembly to the energy sink device after a thermal runaway indication signal has been received; wherein the energy sink device is physically separated from the plurality of battery cell assemblies.

## Description

### TECHNICAL FIELD

Embodiments of the present disclosure relate to a preventive battery discharge system for a battery system with a plurality of battery cell assemblies. Further embodiments relate to a method of mitigating a thermal runaway of a first battery cell assembly of a battery system comprising a plurality of battery cell assemblies.

### BACKGROUND

Battery systems comprising a plurality of battery cell assemblies provide large-scale storage of electrical energy to be used by utilities or industrial plants or in larger non-stationary applications, such as trains or heavy-duty trucks. Within the battery cell assemblies, battery cells may be arranged in groups, exemplarily in battery modules or racks.

Defects of single battery cells within a battery cell assembly can lead to a considerable heat, both due to the electrical energy stored in the batteries and due to the chemical energy stored in the battery components. This effect is also described as "thermal runaway". Further, the excessive heat of one battery cell can damage or destroy neighboring battery cells, that may subsequently also release heat by themselves. In such a scenario, a thermal runaway propagation may occur, in which a defect, which may be associated with a fire or an explosion of battery cells, propagates through the battery system from one battery cell assembly to another. This may eventually result in the destruction of the entire battery system. Even though some coping strategies on different battery system levels are known from the academic literature (e.g. Feng et al., Joule, 4.4 (2020), 743-770), a common strategy of handling failures, in particular of high energy density battery systems, is nevertheless to let the battery system burn down while ensuring the safety of neighboring facilities.

Thus, improved mitigation strategies and systems for mitigating thermal runaway events of battery cells to avoid a thermal runaway propagation might be desired.

### DISCLOSURE OF THE INVENTION

In the view of the foregoing, the present disclosure is directed to a preventive battery discharge system for a battery system, and a method of mitigating a thermal runaway of a first battery cell assembly of a battery system comprising a plurality of battery cell assemblies.

According to an aspect of the present disclosure, a preventive battery discharge system for a battery system with a plurality of battery cell assemblies in a battery system housing is provided. The preventive battery discharge system comprises an interface for receiving a thermal runaway indication signal for a first battery cell assembly of the plurality of the battery cell assemblies; an energy sink device in an energy sink device housing, the energy sink device connectable with the plurality of battery cell assemblies by a switching unit, that is configured to receive (absorb and/or dissipate) electrical energy discharged from at least one second battery cell assembly of the plurality of the battery cell assemblies; and a control module configured to identify the at least one second battery cell assembly to be discharged based upon the thermal runaway indication signal received via the interface; and configured to control the switching unit to discharge the at least one second battery cell assembly and to transport energy from the at least one second battery cell assembly to the energy sink device after a thermal runaway indication signal has been received; and wherein the energy sink device is physically separated from the plurality of battery cell assemblies.

According to another aspect of the present disclosure, a battery energy storage system comprising at least one battery system and at least one preventive battery discharge system according to any of the embodiments described herein is provided.

According to another aspect of the present disclosure, a method of mitigating a thermal runaway of a first battery cell assembly of a battery system comprising a plurality of battery cell assemblies in a battery system housing is provided. The method comprises receiving a thermal runaway indication signal for the first battery cell assembly; identifying at least one second battery cell assembly of the plurality of the battery cell assemblies to be discharged based upon the thermal runaway indication signal received; transporting the electrical energy discharged from the at least one second battery cell assembly to an energy sink device physically separated from the plurality of battery cell assemblies.

According to some embodiments, a battery system comprises a stationary battery system, in particular a battery system integrated in a battery energy storage system (BESS). The battery system may store electric energy to be released at a later point of time. In particular, the stationary battery system may be used to balance an electric grid, improve the stability of the electric grid, or to provide backup power. In some embodiments, the stationary battery system may be part of an industrial site, or may be part of a renewable energy power plant, in particular a renewable energy power plant with a fluctuating electricity production, such as a wind park or a solar park. In some embodiments, the stationary battery system may be movable. In particular, the stationary battery system may be configured to be transported in standardized containers and may be modular. In some embodiments, the battery system may be non-stationary. In particular, the battery system may be configured to be used in a vehicle, in particular in an off-highway vehicle. In particular, the battery system may be configured to be used in a heavy goods vehicle, exemplarily a truck, in mining equipment, in a ship, or in a train, particularly in a locomotive or a battery-electric multiple unit. In some embodiments, the battery system may comprise emergency power systems. The battery system may have a capacity exceeding 25 kWh, 50 kWh, 100 kWh, 500 kWh, 1 MWh or 5 MWh.

The battery system comprises a battery system housing. The battery system housing may enclose the components of the battery system, in particular a plurality of battery cell assemblies, control systems and/or electrical systems configured to receive and/or provide electric energy to an application, the electrical grid and/or an electrical power source. The battery system housing may comprise a container, in particular a standardized container, exemplarily an intermodal container or "shipping container". The battery system housing may comprise feedthroughs for electricity, information, cooling fluids, and/or air circulation. In some embodiments, the battery system housing may be accessible for maintenance, in particular, a worker may access and/or enter the interior of the battery system housing.

The plurality of battery cell assemblies may comprise battery modules and/or battery racks. A battery module may comprise a plurality of battery cells that may be integrated within a battery module housing. A battery rack may comprise a plurality of battery modules and/or of battery cells. The plurality of battery cell assemblies may be configured to be modular, in particular over different levels.

The plurality of battery cell assemblies is connected to a switching unit. The switching unit may connect and/or disconnect the battery cell assemblies to an electrical conductor. In particular, the switching unit may establish an electrical contact of the battery cell assemblies for them to be charged and/or discharged.

According to some embodiments, the battery system comprises at least one battery cell assembly state sensor for determining a state of at least one battery cell assembly. The battery cell assembly state sensor may comprise a temperature sensor, in particular a thermometer, providing a temperature signal. The thermometer may be configured to determine a temperature of at least one of the plurality of battery cell assemblies, a temperature of the battery system cooling fluid or a temperature of the interior of the battery system housing, in particular of the air within the battery system housing. In some embodiments, the battery cell assembly state sensor may be configured to detect chemical compounds. In particular, the battery cell assembly state sensor may be a sniffer device configured to detect gaseous chemical compounds and/or smoke within the battery system housing. The sniffer device may advantageously allow to detect battery cell decomposition products. The battery cell assembly state sensor may allow the preventive battery discharge system to detect a defective first battery cell assembly. In particular, the thermal runaway indication signal may be triggered by the battery cell assembly state sensor.

In some embodiments, the battery cell assembly state sensor may be configured to monitor a battery cell voltage of the plurality of battery cell assemblies, providing a voltage signal. In particular, the battery cell assembly state sensor may trigger the thermal runaway indication signal if the battery cell voltage is not within a predefined voltage range.

According to some embodiments, the battery cell assembly state sensor may be part of a battery management system. The battery management system may provide the thermal runaway signal to the preventive battery discharge system. In some embodiments, the battery management system may predict the state of the at least one battery cell assembly, in particular based on a battery cell assembly state sensor signal. The battery management system may employ a model of the least one battery cell assembly, of the plurality of battery cell assemblies, or of the battery system. Exemplarily, the battery management system may employ a digital twin model.

The thermal runaway indication signal is received via an interface. Receiving the thermal runaway signal via the interface may comprise receiving the thermal runaway signal by a wired or wireless communication from the battery cell assembly state sensor. In some embodiments, the thermal runaway system may be received from a centralized monitoring structure. The centralized monitoring structure may analyze the battery cell assembly state sensor signal to assess the risk of a thermal runaway. In particular, the centralized monitoring structure may be a cloud computing structure. In some embodiments, the control module comprises the interface.

The control module of the preventive battery discharge system is configured to identify the at least one second battery cell assembly to be discharged based upon the thermal runaway indication signal. In particular, the control module may identify the at least one second battery cell assembly with the highest risk for a subsequent thermal runaway due to the thermal runaway of the first battery cell assembly. The control module may identify the at least one second battery cell assembly based upon the location of the first battery cell assembly, the geometry of the battery system, in particular the arrangement of the plurality of battery cell assemblies, voltages of the plurality of battery cell assemblies, temperatures of the plurality of battery cell assemblies and/or the state of charge of the plurality of battery cell assemblies.

According to some embodiments, the control module of the preventive battery discharge system may determine a risk metric for at least one of the plurality of battery cell assemblies. The risk metric may be based upon the location of the first battery cell assembly, the geometry of the battery system, in particular the arrangement of the plurality of battery cell assemblies, voltages of the plurality of battery cell assemblies, temperatures of the plurality of battery cell assemblies and/or the state of charge of the plurality of battery cell assemblies. The risk metric may advantageously allow to rank and to subsequently discharge the at least one second battery cell assembly according to the risk associated.

The control module controls the switching unit to discharge the at least one second battery cell assembly and to transport energy from the at least one second battery cell assembly to the energy sink device. In particular, the control module may monitor a state of charge, a voltage or a temperature of the at least one second battery cell assembly during discharging the at least one second battery cell assembly. The control module may subsequently discharge a plurality of second battery cell assemblies. In particular, the control module may recalculate the risk metric and control the switching device to change the at least one second battery cell assembly to be discharged.

In some embodiments, the at least one second battery cell assembly is discharged to at most 80%, 70%, 60% or 50% state of charge. This may advantageously allow to reduce the heat release rate of the at least one second battery cell assembly and hinder a propagation of a thermal runaway.

The electrical energy discharged from at least one second battery cell assembly is received by (transported to) the energy sink device. The energy sink device may in particular comprise a dissipation device. The energy sink device is configured to accept electrical energy discharged from at least one second battery cell assembly and to convert electrical energy into another form of energy. In particular, the energy sink device may convert the electrical energy into heat. The energy sink device may dissipate the electrical energy by heating a material, exemplarily a liquid. In some embodiments, the battery system comprises a cooling liquid, exemplarily a water-glycol mixture, in particular with a cooling liquid reservoir. The energy sink device may dissipate the electrical energy by heating the cooling liquid, in particular in the cooling liquid reservoir. In the event of a thermal runaway, the cooling liquid may stop to circulate within the battery system, in particular to avoid reintroducing energy dissipated in the cooling liquid into the battery system. In some embodiments, the energy sink device may heat a liquid outside the battery system. Exemplarily, the energy sink device may heat water in a fire pond or another, particularly artificial, body of water. In some embodiments, the energy sink device may heat air surrounding the battery system.

According to some embodiments, the energy sink device comprises a phase change material. In particular, the phase change material absorbs energy, in particular heat, during a phase change. The phase change material may melt, boil, evaporate or sublime due to the dissipation of the electrical energy. For the energy sink device, the phase change material may advantageously allow to deposit electrical energy within the phase change material with a reduced increase in temperature. The phase change material may comprise the cooling liquid. Exemplarily, the energy sink device may evaporate cooling liquid.

According to some embodiment, the energy sink device may comprise an arcing device, exemplarily an arcing box. The arcing device comprises a sacrificial component that may be burnt away for dissipating the electrical energy. The arcing device may be combined with a further phase change material as described above to dissipate the heat generated during arcing.

According to some embodiments, the energy sink device is an energy storage device. In particular, the electrical energy discharged from at least one second battery cell assembly may be transferred to the energy storage device. In some embodiments, the energy sink device may comprise electrical converters, in particular an inverter and/or a rectifier. The energy storage device may comprise a third battery cell assembly. The third battery cell assembly may have a low risk of thermal runaway, in particular due to a distant location with respect to the first and second battery cell assembly. In some embodiments, the third battery cell assembly may have a lower state of charge than the second battery cell assembly. The control module may select the third battery cell assembly based upon the risk metric. In particular, the control module may select a battery cell assembly with a low risk metric as the third battery cell assembly.

In some embodiments, the energy sink device may comprise a second battery system. In particular, the control module may transfer the electrical energy discharged from the at least one second battery cell assembly of the battery system to the second battery system. In particular for a BESS with a plurality of battery systems, the control module may control the switching unit to discharge the at least one second battery cell assembly and to charge the second battery system. In particular, the control module may discharge a plurality of second battery cell assemblies, or all battery cell assemblies of the battery system. The control module may select a second battery system with a low risk of thermal runaway propagation, in particular a second battery system which is located at a distance of the battery system.

In some embodiments, the energy sink device may comprise a supercapacitor. The supercapacitor may advantageously be charged at an increased speed and may have an extended lifetime, in particular for a high number of charging/discharging cycles.

Employing an energy storage device advantageously reduces losses of electrical energy of the preventive battery discharge system. In particular, employing the energy storage device may allow to discharge the at least one second battery cell assembly at an earlier point in time and/or in response to a less severe or less certain thermal runaway indication signal. In other words, the control module may employ a lower intervention threshold, in particular since the electric energy discharged is not lost, particularly not in its entirety.

In some embodiments, the energy sink device may be configured to dissipate (use) the electrical energy discharged from the at least one second battery cell (e.g., at least part of the energy) by propelling a fire suppression system without reintroducing the energy discharged from at least one second battery cell assembly. In particular, the energy sink device may be configured to evaporate a fire suppressing liquid that can be propelled to nozzles and be transferred to the first battery cell assembly. Alternatively or additionally, the energy sink device may evaporate a liquid and may increase the pressure within a fire suppressing unit, thereby propelling a fire suppressing liquid to the first battery cell assembly. Employing the electrical energy discharged from the at least one second battery cell to propel a fire suppression system advantageously allows to suppress the thermal runaway, also if the fire suppression system cannot be supplied with electrical energy from the outside, exemplarily due to a defect. In other words, a passive fire suppression system may be provided that is triggered by a thermal runaway event.

The energy sink device is physically separated from the plurality of battery cell assemblies. In particular, the energy sink device housing separates the energy sink device from the first battery cell assembly and provides separation from fire and/or explosion effects caused by a thermal runaway event of the first battery cell assembly. In some embodiments, the energy sink device housing separates the at least one second battery cell assembly from the energy sink device and provides separation from heat occurring due to the dissipation of the electrical energy discharged from the at least one second battery cell assembly. The energy sink device may be considered as physically separated from the plurality of battery cell assemblies if the energy sink device and the plurality of battery cell assemblies are not structurally connected; in other words, if the plurality of battery cell assemblies and the energy sink device form separate physical units.

The energy sink device may be considered as physically separated from the plurality of battery cell assemblies if thermal properties of the energy sink device and of the plurality of battery cell assemblies, in particular during a thermal runaway event, are not coupled or only weakly coupled. In particular, electrical energy transported to the energy sink device from the at least one second battery cell assembly may not be reintroduced to the plurality of battery cell assemblies, in particular not to the at least one second battery cell assembly. Exemplarily, the energy sink device may be considered as physically separated from the plurality of battery cell assemblies if a fire- and/or heat-propagation prevention barrier is present that separates the energy sink device and the plurality of battery cell assemblies. The energy sink device housing may comprise the fire- and/or heat-propagation prevention barrier. In some embodiments, the fire- and/or heat-propagation prevention barrier may be established by locating the energy sink device at an appropriate distance from the plurality of battery cell assemblies; in other words, the space between the energy sink device and the plurality of battery cell assemblies may form the fire- and/or heat-propagation prevention barrier. Typically, the energy sink device comprises an energy dissipation path (heat removal path) that allows to remove heat due to the energy dissipated in the energy sink device from the battery system. Exemplarily, the energy dissipation path may comprise cooling the energy sink device with an external cooling source, in particular outside air or water.

In some embodiments, the energy sink device is outside the battery system housing. In particular, the energy sink device housing and the battery system housing form separate physical units. The energy sink device and the battery system may be positioned at a distance. Having the energy sink device housing, and thus the energy sink device, outside the battery system housing avoids geometrical constraints for either housing. In particular, the battery system housing may be optimized for housing the plurality of battery cell assemblies. The energy sink device housing may be optimized for housing the energy sink device. In some embodiments, the energy sink device may be different for different battery system use scenarios or battery system locations. Having the energy sink device housing, and thus the energy sink device, outside the battery system, advantageously allows to employ a different energy sink device without changing the battery system housing or the battery system structure. Thus, a modularized preventive battery discharge system may be provided.

The energy sink device housing and the battery system housing may be connected to exchange electric currents, liquids, in particular cooling liquids, and information, exemplarily sensor signals.

In some embodiments, for a BESS comprising a plurality of battery systems, at least one preventive battery discharge system is associated to a plurality of battery systems. In particular, one preventive battery discharge system may be associated to all battery systems of the BESS. Having at least one preventive battery discharge system for a plurality of battery systems advantageously allows to reduce the number of energy sink devices and reduces cost, complexity and installation area required.

In some embodiments, the energy sink device is within the battery system housing. Exemplarily, for a battery system in a container, the energy sink device is within the container, particularly next to the plurality of battery cell assemblies. The energy sink device housing may be fire-resistant. Exemplarily, the energy sink device housing may comprise the fire- and/or heat-propagation prevention barrier. In particular, the energy sink device housing may shield the energy sink device from heat or explosion fragments caused by a thermal runaway of the first battery cell assembly. A fire-resistant energy sink device housing advantageously ensures that the preventive battery discharge system can operate during a thermal runaway and the associated heat and, potentially, debris.

Further, having the energy sink device housing, and thus the energy sink device, within the battery system housing advantageously allows to transport and install the battery system together with the preventive battery discharge system in a single unit, in particular using a modular battery system housing as described above. Further, fewer feedthroughs may be required with the energy sink device being within the battery system housing.

In some embodiments, the preventive battery discharge system may be a module attachable to an existing battery system or BESS. In particular, the preventive battery discharge system may be connected to an existing battery system or BESS to improve the protection during thermal runaway events and to mitigate thermal runaway propagation. According to some embodiments, the energy sink device may be replaced without modifying the plurality of physical battery assemblies.

Embodiments of the present disclosure provide an improved thermal runaway propagation mitigation. Damages due to thermal runaway events of single battery cells or battery cell assemblies can be contained within the respective unit, in particular by reducing the risk of a thermal runaway event in other battery cell assemblies. This reduces financial damage, operational downtime and fire hazards as well as environmental contamination in by defective battery systems.

### BRIEF DESCRIPTION OF THE DRAWINGS

The accompanying drawings relate to embodiments of the disclosure and are described in the following:
- FIG 1: schematically illustrates a battery energy storage system with a preventive battery discharge system according to embodiments described herein.
- FIG 2: schematically illustrates a battery system with a preventive battery discharge system according to embodiments described herein.
- FIG 3: schematically illustrates a method of mitigating a thermal runaway of a battery cell assembly of a battery system comprising a plurality of battery cell assemblies in a battery system housing.

### DETAILED DESCRIPTION OF EMBODIMENTS

Reference will now be made in detail to the various embodiments of the disclosure, one or more examples of which are illustrated in the figures. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield a further embodiment. It is intended that the description includes such modifications and variations. In the figures, elements may be depicted with exaggerated dimensions to improve the comprehensibility of the detailed description of embodiments. In particular, relations of lengths and widths of components shown may distorted. Further, some elements may be depicted with enlarged dimensions while other elements in the same figure are depicted, relatively, with reduced dimensions.

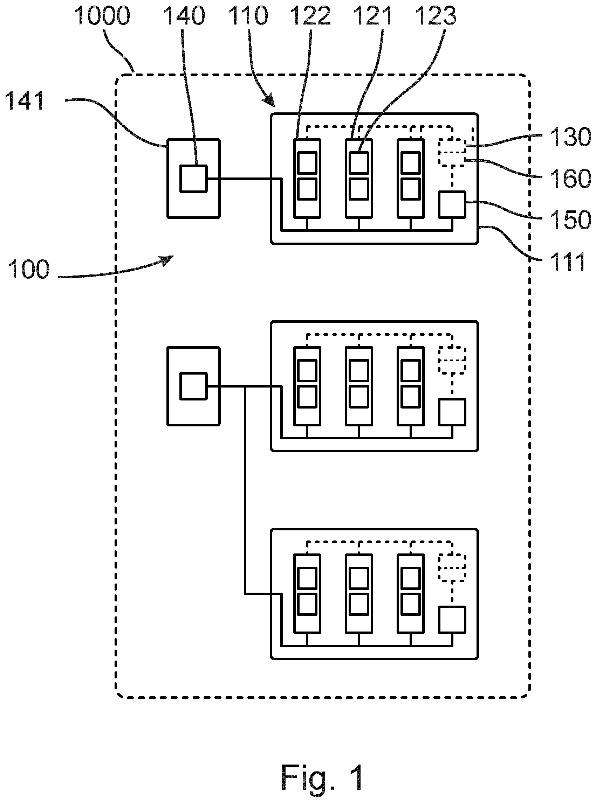

FIG 1 schematically illustrates a battery energy storage system 1000 with a plurality of battery systems 110 and a plurality of preventive battery discharge systems 100. In FIG 1, the battery energy storage system 1000 exemplarily comprises three battery systems 110 and two preventive battery discharge systems 100. Two of the three battery systems 110 are connected to a single preventive battery discharge system 100.

Each of the battery systems comprises a plurality of battery cell assemblies 121, 122. According to some embodiments, each of the plurality of battery cell assemblies 121, 122 is a battery rack, with a plurality of battery modules 123 being arranged within each battery rack. The plurality of battery cell assemblies 121, 122 is connected to a switching unit 150. The plurality of battery cell assemblies 121, 122 is electrically connected to the energy sink device 140. The switching unit 150 is configured to transport electrical energy discharged from at least one second battery cell assembly 122 of the plurality of the battery cell assemblies to the energy sink device 140. The switching unit 150 is controlled by the control module 160. The control module 160 identifies at least one second battery cell assembly 122 to be discharged based upon a thermal runaway indication signal received via an interface 130. In FIG 1, the interface 130 is in communication with sensors associated with the plurality of battery cell assemblies 121, 122.

The battery system 110 is located in a battery system housing 111. The energy sink device 140 is located within an energy sink device housing 141. In FIG 1, the energy sink device housing 141 and the battery system housing 111 are physically separated. However, in embodiments not shown in the figures, the energy sink device housing 141 is within the battery system housing 111.

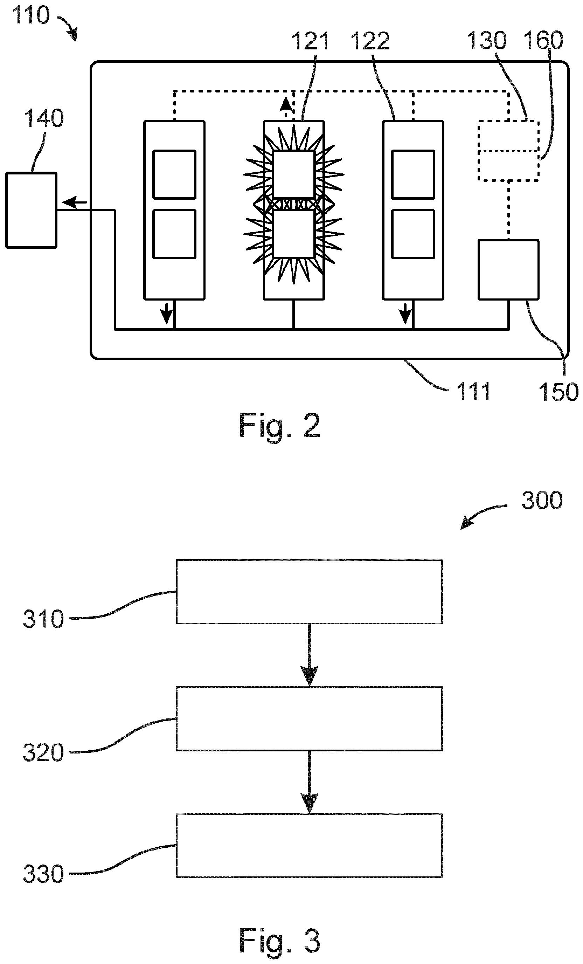

In FIG 2, the preventive battery discharge system and a single battery system 110, similar to the battery systems 110 of FIG 1, are schematically shown in operation during a thermal runaway event. The first battery cell assembly 121 experiences the thermal runaway event with the adjacent second battery assemblies 122 not being affected yet. The interface 130 receives a thermal runaway signal from the first battery cell assembly 121. Based upon the thermal runaway signal, the control module 160 identifies the at least one second battery cell assembly 122 to be discharged and controls the switching unit 150. The switching unit 150 discharges the at least one second battery cell assembly 122. The electric energy discharged from the at least one second battery cell assembly 122 is transported to an absorbed and/or dissipated in the dissipating device 140.

FIG 3 schematically illustrates a method 300 of mitigating a thermal runaway of a first battery cell assembly of a battery system comprising a plurality of battery cell assemblies in a battery system housing. The method 300 comprises receiving 310 a thermal runaway indication signal for the first battery cell assembly. Based upon the thermal runaway signal received 310, at least one second battery cell assembly of the plurality of the battery cell assemblies to be discharged is identified 320. The electrical energy discharged from the at least one second battery cell assembly is transported 330 to an energy sink device physically separated from the plurality of battery cell assemblies.

## Claims

1. A preventive battery discharge system (100) for a battery system (110) with a plurality of battery cell assemblies (121, 122) in a battery system housing (111), the preventive battery discharge system comprising:
an interface (130) for receiving a thermal runaway indication signal for a first battery cell assembly (121) of the plurality of the battery cell assemblies;
an energy sink device (140) in an energy sink device housing (141), the energy sink device connectable with the plurality of battery cell assemblies by a switching unit (150), that is configured to receive electrical energy discharged from at least one second battery cell assembly (122) of the plurality of the battery cell assemblies;
a control module (160) configured to identify the at least one second battery cell assembly to be discharged based upon the thermal runaway indication signal received via the interface; and configured to control the switching unit to discharge the at least one second battery cell assembly and to transport energy from the at least one second battery cell assembly to the energy sink device after a thermal runaway indication signal has been received;
wherein the energy sink device is physically separated from the plurality of battery cell assemblies.

2. The preventive battery discharge system of claim 1, wherein the energy sink device is outside the battery system housing.

3. The preventive battery discharge system of claim 1, wherein the energy sink device is within the battery system housing and wherein the energy sink device housing is fire-resistant.

4. The preventive battery discharge system according to any of the preceding claims, wherein the energy sink device comprises a phase change material.

5. The preventive battery discharge system of claim 4, wherein the phase change material comprises a cooling liquid of the battery system.

6. The preventive battery discharge system according to any of the preceding claims, wherein the energy sink device comprises an arcing device.

7. The preventive battery discharge system of any of claims 1 to 3, wherein the energy sink device is an energy storage device.

8. The preventive battery discharge system according to any of the preceding claims, wherein the battery system housing comprises a standardized container.

9. The preventive battery discharge system according to any of the preceding claims, wherein the at least one second battery cell assembly is discharged to at most 80% state of charge.

10. The preventive battery discharge system according to any of the preceding claims, wherein the control module identifies the at least one second battery cell assembly based upon a location of the first battery cell assembly and/or upon a state of charge of the plurality of battery cell assemblies.

11. The preventive battery discharge system according to any of the preceding claims, wherein the thermal runaway indication signal comprises a temperature signal and/or a voltage signal of the first battery cell assembly.

12. The preventive battery discharge system according to any of the preceding claims, wherein the energy sink device is configured to dissipate the electrical energy discharged from the at least one second battery cell assembly by propelling a fire suppression system.

13. A battery energy storage system (1000) comprising at least one battery system and at least one preventive battery discharge system according to any of the preceding claims.

14. The battery energy storage system of claim 13, wherein one of the at least one preventive battery discharge system is associated to a plurality of battery systems.

15. A method (300) of mitigating a thermal runaway of a first battery cell assembly of a battery system comprising a plurality of battery cell assemblies in a battery system housing, the method comprising:
receiving (310) a thermal runaway indication signal for the first battery cell assembly;
identifying (320) at least one second battery cell assembly of the plurality of the battery cell assemblies to be discharged based upon the thermal runaway indication signal received;
transporting (330) the electrical energy discharged from the at least one second battery cell assembly to an energy sink device physically separated from the plurality of battery cell assemblies.
